# EUROPÄISCHE PATENTSCHRIFT

(11) **EP 4 129 042 B1**
(45) Veröffentlichungstag und Bekanntmachung des Hinweises auf die Patenterteilung: **05.11.2025**
(21) Anmeldenummer: 22188378.8
(22) Anmeldetag: 02.08.2022
(51) Int. Cl.: A01D 57/03

(54) **SCHNEIDWERK MIT SEITLICH KLAPPBAREN HASPELZINKEN**
CUTTING DEVICE WITH LATERALLY FOLDABLE REEL TINES
MÉCANISME DE COUPE POURVU DE DENTS DE RABATTEUR LATÉRALEMENT RABATTABLES

(30) Priorität: 05.08.2021 DE 102021120403
(43) Veröffentlichungstag der Anmeldung: 08.02.2023
(73) Patentinhaber: Carl Geringhoff GmbH & Co. KG, 59227 Ahlen (DE)
(72) Erfinder: Sudhues, Steffen, 59227 Ahlen (DE); Sälker, Dominik, 48151 Münster (DE); Pokriefke, Michael, 27798 Hude (DE)
(74) Vertreter: Weeg, Thomas

(56) Entgegenhaltungen:
- JP-A- S63 283 517
- US-A1- 2018 242 525
- US-A1- 2019 269 072

## Beschreibung

Die vorliegende Erfindung bezieht sich auf ein Schneidwerk nach dem Oberbegriff des Anspruchs 1.

Wenn in dieser Beschreibung von "vorne", "frontseitig" und "hinten" die Rede ist, so werden diese Begriffe immer bezogen auf die Arbeitsrichtung des Schneidwerks verwendet. Die Arbeitsrichtung ist die Richtung, in die das Schneidwerk bewegt wird, um Erntegut zu schneiden. Wenn in dieser Beschreibung von einer Haspel die Rede ist, so ist damit eine Haspel gemeint, die einteilig ausgeführt sein kann, so dass sich die einteilige Haspel über die gesamte Arbeitsbreite des Schneidwerks erstreckt, oder die mehrteilig ausgeführt ist, so dass sich die einzelnen Haspelteile nur über eine Teilarbeitsbreite erstrecken, die mehreren Haspelteile zusammen aber die Arbeitsbreite des Schneidwerks abdecken.

Aus der Schrift DE 10 2005 052 394 A1 ist es bekannt, einen aus einem Kunststoff hergestellten Zinken mit einem Federstahl an einem Tragkörper zu befestigen. Der Tragkörper besteht dabei üblicherweise aus einem Rundrohr oder einem Profil, das an mehreren Lagerarmen oder Lagerblechen in einem radialen Abstand an der Haspelwelle gehalten ist. Über den Umfang der Haspel sind mehrere Tragkörper verteilt angeordnet, und an jedem Tragkörper sind eine Anzahl von Haspelzinken befestigt. Zur Vermeidung von Überlastungen wird im Federstahl ein federnd nachgiebiger Bereich bereitgestellt, der im Fall einer großen Belastung den Zinken ausweichbar hält.

Die Schrift US 2019/269 072 A1 offenbart ein gattungsgemäßes Schneidwerk. Die in diesem Schneidwerk eingesetzte Haspel ist während des Erntebetriebs in einem Abschnitt seitlich teleskopartig auszieh- und einschiebbar. Beim Ausziehen des Haspelrohres zur Mitte des Schneidwerks hin stellen sich die Haspelzinken federkraftbetätigt auf, wenn sie nicht mehr in der eingeschobenen Position von der Innenfläche des aufnehmenden Teleskoprohres an den Außenumfang des teleskopierbaren Haspelrohrabschnitts angedrückt gehalten sind. Umgekehrt legt sich der Haspelzinken durch einen von der Innenfläche des aufnehmenden Teleskoprohres ausgeübten Druck an den Außenumfang des teleskopierbaren Haspelrohrabschnitts an, wenn dieser in das aufnehmende Teleskoprohr eingeschoben wird. Die Schwenkstellungen der im teleskopierbaren Bereich befindlichen Haspelzinken sind also insbesondere von der Einschubposition des teleskopierbaren Haspelrohrabschnitts in dem aufnehmenden Teleskoprohr abhängig. Das vom Schneidwerk aufgenommene Erntegut hat keinen Einfluss auf die aktuelle Schwenkstellung der Haspelzinken.

Auch in der Schrift US 2018/0242525 A1 ist ein klappbarer Haspelzinken offenbart. Der Haspelzinken wird mit einer Spannfeder in einer gewünschten Position gehalten. Um den Haspelzinken zwischen zwei verschiedenen Stellpositionen hin und her verstellen zu können, muss die Lage des Haspelzinkens manuell gegen die Kraft der Spannfeder verstellt werden.

In der Schrift JP S63 283517 A ist ein Haspelzinken offenbart, dessen Schwenklage über eine Kulissenführung zwangsweise verstellbar ist.

Ein federnd gelagerter Haspelzinken ist in jeder Belastungsrichtung beweglich. Die Kräfte, die erforderlich sind, um einen Haspelzinken in eine Ausweichrichtung zu bewegen, sind genauso groß wie die Rückstellkräfte, die dabei aufgebaut werden. Das bedeutet, dass eine Feder, die leicht in eine Richtung beweglich ausgestaltet sein soll, genauso leicht in eine andere Richtung beweglich ist. Ein Haspelzinken, der Erntegut in eine Förderrichtung bewegen soll, muss aber zumindest in Förderrichtung eine gewisse Steifigkeit aufweisen, um diese Aufgabe erfüllen zu können. Die bekannten Federn als Lagerung für einen Haspelzinken stellen hinsichtlich der Auslegung der für sie geltenden Federkennlinien immer nur einen Kompromiss dar. Da es bei der aus dem Stand der Technik bekannten federnden Lagerung der Haspelzinken nur darum geht, Überlastungen zu vermeiden, bewegen sich diese Haspelzinken nur bei sehr hohen Kraftspitzen. Bei einem Kontakt der Haspelzinken mit Erntegut erlauben die Federn kaum irgendwelche Ausweichbewegungen.

Es ist die Aufgabe der vorliegenden Erfindung, das Förderverhalten der an einem Schneidwerk befestigten Haspelzinken zu verbessern.

Die Aufgabe wird für eine gattungsgemäßes Schneidwerk mit Haspelzinken nach den Merkmalen des kennzeichnenden Teils des Anspruchs 1 gelöst.

Durch die Drehlagerung der Haspelzinken sind diese in ihrer Drehrichtung beweglich, während sie in axialer Richtung ihrer Rotationsachse steif bleiben. Die Rotationsachse ist dafür schräg zur Förderrichtung der Fördereinrichtung ausgerichtet.

Durch die Ausrichtung der Rotationsachse schräg zur Förderrichtung ist es möglich, die freien Enden der Haspelzinken mit einem hoch aufbauenden Paket eines abgeförderten Ernteguts hochzuklappen, wenn dieses bei seiner Abförderung mit der Fördereinrichtung so hoch auf der Annahmefläche des Schneidwerks aufbaut, dass die oberste Schicht des Pakets seitlich gegen die freien Enden der Haspelzinken stößt. Derart hohe Pakete können sich insbesondere bei der Rapsernte, aber auch bei anderen Getreidearten auf einem Schneidwerkstisch aufbauen. Da sich üblicherweise die Menge des geschnittenen Ernteguts in Förderrichtung der Fördereinrichtung bis zum Abgabepunkt zunehmend vergrößert, ergibt sich insbesondere im Bereich der dichter zum Abgabepunkt gelegenen Haspelzinken ein hoch aufbauendes Paket aus abgefördertem Erntegut. Diesem Umstand entsprechend kann es vorteilhaft sein, nur die dichter zum Abgabepunkt gelegenen Haspelzinken drehbeweglich auszugestalten, oder unterschiedlich große Schwenkwinkel vorzusehen, um die die Haspelzinken drehbeweglich gelagert sind.

Für das Hochklappen der freien Enden der Haspelzinken genügen bereits relativ geringe Kräfte. Da die Haspelzinken in axialer Richtung der Rotationsachse aber steif bleiben, bleibt die Förderwirkung in dieser Richtung voll erhalten. Wenn die Haspel also um Ihre Drehachse rotiert, können die Haspelzinken Erntegut weiterhin mit der erforderlichen Förderkraft erfassen, in Rotationsrichtung der Haspel über den Messerbalken hinwegbewegen und sodann auf der Annahmefläche des Schneidwerks und/oder der Fördereinrichtung ablegen.

Natürlich ist es auch möglich, die Drehbewegung des Haspelzinkens auch gegen die Wirkung eines Kraftspeichers, wie beispielsweise einer Feder, zuzulassen. Der Kraftspeicher kann dabei aber so ausgelegt sein, dass er nur vergleichsweise geringe Rückstellkräfte aufbaut, sodass es eines gewissen mäßigen Förderdruckes durch das Erntegut bedarf, um das freie Ende des Haspelzinkens zur Seite zu drücken. Von den Rückstellkräften aus dem Kraftspeicher angetrieben bewegt sich dann der Haspelzinken schneller wieder in seine Normalstellung zurück, als das bei einer rein gravitätisch bewirkten Rückstellbewegung der Fall wäre. Trotz der federnden Abstützung des Förderzinkens mit einer nur mäßigen Federkraft in Förderrichtung des Ernteguts bleibt es bei der fest bleibenden Förderwirkung in Rotationsrichtung der Haspel.

Wird das freie Ende eines Haspelzinkens angeklappt, so vergrößert sich bei einer gleich bleibenden Höheneinstellung der Haspel die lichte Höhe zwischen dem Messerbalken und der Unterkante des jeweiligen Haspelzinkens. Dabei legt sich das freie Ende eines Haspelzinkens in eine Richtung, die der Förderrichtung des Ernteguts entspricht. Ein aufgebauter Stapel des Ernteguts bewegt sich dann störungsfreier in Förderrichtung und wird nicht durch in das Erntegut eingreifende starre Haspelzinken gebremst. Eventuelle Körnerverluste, die sich im Bereich starrer Haspelzinken ergeben könnten, werden auf diese Weise vermieden.

Die Ausweichstellung entspricht im Verhältnis zur Neutralstellung einer räumlichen Lage des Haspelzinkens, bei der das freie Ende des Haspelzinkens auch im Verhältnis zur Rotationsrichtung der Haspel vor- oder nachverlagert ist. Der Haspelzinken schwenkt bei dieser Ausgestaltung also nicht in eine zur Rotationssachse der Haspel parallelen Richtung, sondern in einem Winkelversatz dazu. Bei einer Vorverlagerung folgt das freie Ende des Haspelzinkens der Bewegungsrichtung des Ernteguts, soweit sich dieses nicht nur in Förderrichtung, sondern in die vom Messerbalken weiter entfernten hinteren Bereiche der Annahmefläche bewegt. Der Stapel des Ernteguts wird dadurch weniger auseinander gerissen. Bei einer Nachverlagerung erhält der Stapel in seinem oberen Bereich eine Förderkomponente, die der Einzugsrichtung des Ernteguts entgegengesetzt ist. Durch die Abförderung des Erntegutstapels in seinem unteren Bereich in die Richtung der Erntemaschine erhält der Stapel einen Drehimpuls, durch den der Einzug und die Abgabe des Ernteguts in Richtung der Erntemaschine verbessert werden. Die Lagerung des Haspelzinkens kann so ausgebildet sein, dass dessen Winkellage im Verhältnis zur Neutralstellung verstellbar ist, und zwar sowohl hinsichtlich einer Verstellung des Anstellwinkels als solchem als auch hinsichtlich einer Verstellung zwischen einer Voreilung und einer Nacheilung. Die Haspelzinken können auf diese Weise optimal an ein jeweiliges Erntegut und an die bei der Ernte dieses Ernteguts herrschenden Einsatzbedingungen angepasst werden.

Nach einer Ausgestaltung der Erfindung ist die Beweglichkeit des Haspelzinkens aus der Neutralstellung in eine Richtung, die der Förderrichtung der Fördereinrichtung im Bereich des jeweiligen Haspelzinkens entgegengesetzt ist oder dieser entspricht, durch einen Anschlag gesperrt. Der in der der Förderrichtung der Fördereinrichtung entsprechenden Richtung angeordnete Anschlag ermöglicht es, die Ausweichbewegung des Haspelzinkens zu begrenzen. Dasselbe gilt für einen Anschlag, der in der der Förderrichtung der Fördereinrichtung entgegengesetzten Richtung des jeweiligen Haspelzinkens sperrt. Wenn der Anschlag verstellbar ausgeführt ist, können die Haspelzinken über die Arbeitsbreite des Schneidwerks hinweg auf eine maximale Auslenkung hin eingestellt werden, bei der der Gutstrom in Förderrichtung möglichst wenig durch die Haspelzinken gestört wird.

Nach einer Ausgestaltung der Erfindung ist das Steuerungsmittel als eine die Rotationsachse bildende Schwenkachse ausgebildet, die nicht parallel zur Längserstreckungsrichtung des Haspelrechenrohrs ausgerichtet ist. Bei der Schwenkachse kann es sich um die Lagerwelle handeln, mit der der Haspelzinken am Haspelrechenrohr gehalten ist. Bei einer drehbeweglichen, aber fest positionierten Lagerung des Haspelzinkens am Haspelrechenrohr mittels einer Lagerwelle bewegt sich das freie Ende des Haspelzinkens nur entlang einer definierten Bewegungsbahn aus einer Neutralstellung in eine Ausweichstellung und wieder zurück.

Nach einer Ausgestaltung der Erfindung ist als Steuerungsmittel eine zur Rotationsachse des Haspelzinkens schräg angestellte und ortsfeste Gleitfläche als Steuerkulisse ausgebildet, auf der der Haspelzinken mit einer Abstützfläche gehalten ist, die bei einer Drehbewegung des Haspelzinkens um die Rotationsachse auf der Gleitfläche gleitet. Die Gleitflächen können mit einer Spannfeder aufeinander gehalten sein, so dass sich bei einer relativen Drehbewegung der Gleitflächen aufeinander eine Rückstellkraft aufbaut. Eine Gleitflächenlagerung kann geschlossen ausgeführt werden, so dass sich daran nicht so leicht Erntegut aufhängen und ansammeln kann. Als Steuerkulisse kann auch eine Führungskulisse verwendet sein, die nur eine translatorische Bewegung entlang der körperlichen Steuerkanten der Kulissenführung zulässt.

Nach einer Ausgestaltung der Erfindung ist der Haspelzinken gegen die Schwerkraft aus der Neutralstellung in die Ausweichstellung beweglich. Durch die relativ geringen Kräfte, die zum Hochklappen der Haspelzinken ausreichen, können für das Zurückstellen der Haspelzinken in die Ausgangslage ebenfalls schon geringfügige Kräfte genügen. So kann bereits das Eigengewicht des Haspelzinkens bereits dazu ausreichen, diesen in seine Ausgangsstellung zurückfallen zu lassen, wenn der Kraftimpuls aus dem Kontakt des freien Endes des Haspelzinkens mit dem Erntegut wegfällt. Zur Förderung und Absicherung der Rückstellbewegung kann das freie Ende des Haspelzinkens mit einem besonderen Gewicht versehen sein, wie einem Bleigewicht oder einem sonstigen metallischen Raumkörper.

Nach einer Ausgestaltung der Erfindung ist der Haspelzinken in der Neutralstellung und/oder in einer oder mehreren Ausweichstellungen mit einem Haltemittel arretierbar. Wenn die Förderwirkung der Haspelzinken nicht benötigt wird, oder wenn es wünschenswert ist, mit den Haspelrechenrohren dichter an den Ackerboden und/oder den Messerbalken zu kommen, ist diese Verstellmöglichkeit vorteilhaft. Bei den Haltemitteln kann es sich beispielsweise um Rastnasen handeln, die zu entsprechenden Ausnehmungen in der Oberfläche der Anlagefläche des Haspelzinkens passen, oder umgekehrt. Eine in die zugehörige Ausnehmung eingerastete Rastnase hält den Haspelzinken in der gewünschten Position. Nach Überwindung des Rastwiderstands einer Rastnase ist der Haspelzinken in eine andere Schwenklage verstellbar, in der er wieder von einer Rastnase in einer eingerasteten Stellung gehalten ist. Anstelle einer Rastverbindung können auch viele andere verstellbare Verbindungstechniken verwendet sein.

Nach einer Ausgestaltung der Erfindung ist die maximal erreichbare Ausweichstellung durch einen Anschlag begrenzt und das freie Ende des Haspelzinkens ist in seiner maximalen Ausweichstellung aus der Neutralstellung um bis zu 75° in eine Richtung quer zur Arbeitsrichtung des Schneidwerks ausgelenkt. Die Anschläge verhindern, dass die Haspelzinken in Winkellagen verschwenken können, in denen sie nicht mehr ausreichend förderwirksam sind. Durch die Beschränkung der maximalen Ausweichstellung auf einen Winkel von bis zu 75° aus der Neutralstellung ist das freie Ende des Haspelzinkens noch zumindest noch einen kleinen Rest förderaktiv.

Nach einer Ausgestaltung der Erfindung ist der Haspelzinken unter Einwirkung einer auf ihn in eine der Förderrichtung der Fördereinrichtung im Bereich des jeweiligen Haspelzinkens entsprechenden Richtung einwirkenden Kraft ≥ 5 N aus der Neutralstellung in eine Ausweichstellung beweglich. Bei der vorgenannten Mindeststellkraft wird verhindert, dass die Haspelzinken frei pendeln oder sich in Hanglage ungewollt verstellen können.

Weitere Merkmale der Erfindung ergeben sich aus den Ansprüchen, den Figuren und der gegenständlichen Beschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1:: eine Erntemaschine mit einem frontseitig angebauten Schneidwerk,
- Fig. 2:: eine Ansicht auf einen Haspelzinken mit zwei extremen Schwenkstellungen,
- Fig. 3:: eine Ansicht auf ein Haspelrechenrohr mit senkrecht herabhängenden Haspelzinken,
- Fig. 4:: eine Ansicht auf das in Fig. 3 gezeigte Haspelrechenrohr, bei der die freien Enden der Haspelzinken zur Seite verschwenkt sind,
- Fig. 5:: eine Ansicht auf einen einzelnen nicht verschwenkten Haspelzinken, und
- Fig. 6:: eine Ansicht auf den in Figur 5 gezeigten Haspelzinken in einer Schwenkstellung.

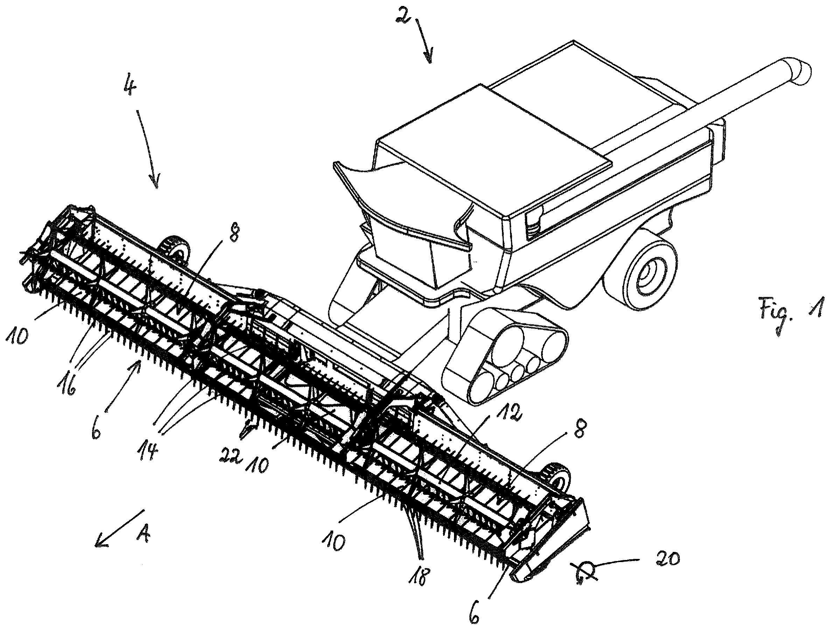

In Fig. 1 ist eine Erntemaschine 2 mit einem frontseitig angebauten Schneidwerk 4 gezeigt. Das Schneidwerk 4 weist einen Messerbalken 6 auf, mit dem die Erntemaschine 2 in den stehenden Bestand eines Ernteguts in Arbeitsrichtung A hineinfährt und das Erntegut schneidet. Das geschnittene Erntegut fällt auf die Annahmefläche 8, von wo aus es in Förderrichtung F mit einer Fördereinrichtung 10 in die Richtung der Übernahmeorgane der Erntemaschine 2 abgefördert wird. Im gezeigten Ausführungsbeispiel ist die Annahmefläche 8 die Oberseite eines endlos umlaufenden Bandförderers, der im Ausführungsbeispiel die Fördereinrichtung 10 ausbildet. Das Schneidwerk 4 ist im Ausführungsbeispiel ein Draper-Schneidwerk, die Erfindung kann aber auch an allen anderen bekannten Schneidwerkstypen verwendet werden, die eine Haspel aufweisen. Insbesondere auch in Schneidwerken 4 mit darin angeordneten starren Förderschnecken als Fördereinrichtung 10 ist die vorliegende Erfindung anwendbar. Für ein Schneidwerk 4 des Draper-Typs sei angemerkt, dass sich die Problematik mit den die Querförderung störenden Förderzinken 16 nur bei den außen liegenden Förderbändern stellt, da diese das Erntegut quer zur Arbeitsrichtung des Mähdreschers abfördern. Das Mittenband fördert das darauf abgelegte Erntegut direkt nach hinten in Richtung des Schrägförderkanals des Mähdreschers ab, so dass sich dort das Problem des in eine Richtung quer zur Abförderrichtung des Ernteguts fördernden Haspelzinkens nicht stellt.

Damit das Erntegut nicht unter das Schneidwerk 4 fällt, nachdem es vom Messerbalken 6 geschnitten wurde und bevor es auf die Annahmefläche 8 gefallen ist, stützt die Haspel 12 in dieser Phase das Erntegut ab. Die Haspel 12 ist an höhenverstellbaren Tragarmen gehalten. Die Haspel 12 ist an den Tragarmen längsverstellbar gehalten. Die Haspel 12 ist in die Rotationsrichtung 20 rotierend angetrieben, wobei die Drehzahl verstellbar ist. Bei manchen Schneidwerken 4 ist außerdem noch der Anstellwinkel der Haspelzinken 16 wahlweise einstellbar, die an dem Haspelrechenrohr 14 befestigt sind. Jeder Haspelzinken 16 ist über ein Lager 18 mit dem Haspelrechenrohr 14 verbunden. An seinem dem Lager 18 entfernten Ende befindet sich das freie Ende 22 des jeweiligen Haspelzinkens 16.

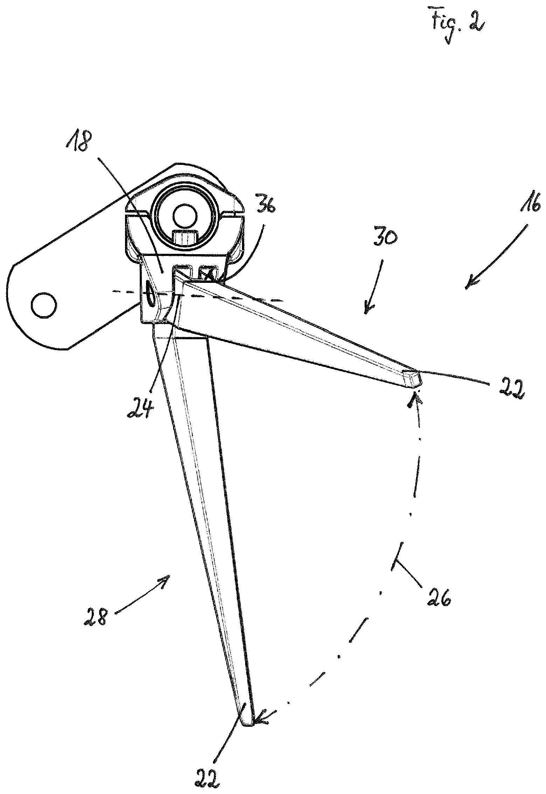

Die Fig. 2 zeigt eine Ansicht auf einen Haspelzinken 16 mit zwei extremen Schwenkstellungen: einer ersten Neutralstellung 28 und einer zweiten Ausweichstellung 30. Zwischen diesen beiden Extremstellungen ist der Haspelzinken 16 um eine Rotationsachse 24 entlang einer durch ein Steuerungsmittel vorgegebenen Bewegungsbahn 26 beweglich. Als Steuerungsmittel ist im gezeigten Ausführungsbeispiel eine Schwenkachse 38 verwendet, die in einer entsprechenden Ausnehmung im Lager 18 gehalten ist. Anschläge 36 verhindern, dass der Haspelzinken 16 in Schwenkstellungen verschenken kann, in denen er nicht mehr förderaktiv ist.

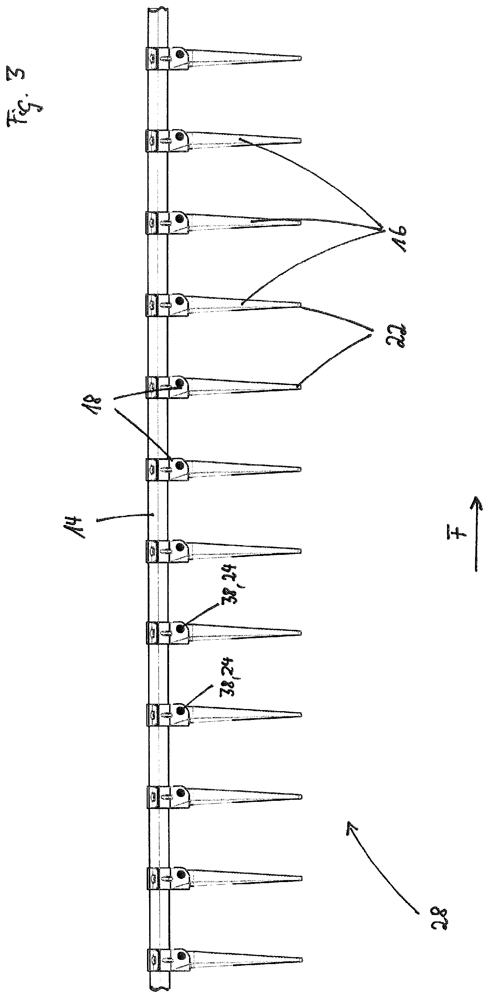

Die Fig. 3 zeigt eine Ansicht auf ein Haspelrechenrohr 14 mit senkrecht herabhängenden Haspelzinken 16. in dieser Schwenkstellung reichen die freien Enden 22 der Haspelzinken 16 so weit nach unten wie möglich. **In** Rotationsrichtung 20 der Haspel 12 sind die Haspelzinken 16 starr, während sie in Förderrichtung F um die Rotationsachse 24 herum schwenkbeweglich sind, wenn in Förderrichtung F bewegtes Erntegut die freien Enden 22 der Haspelzinken 16 streift.

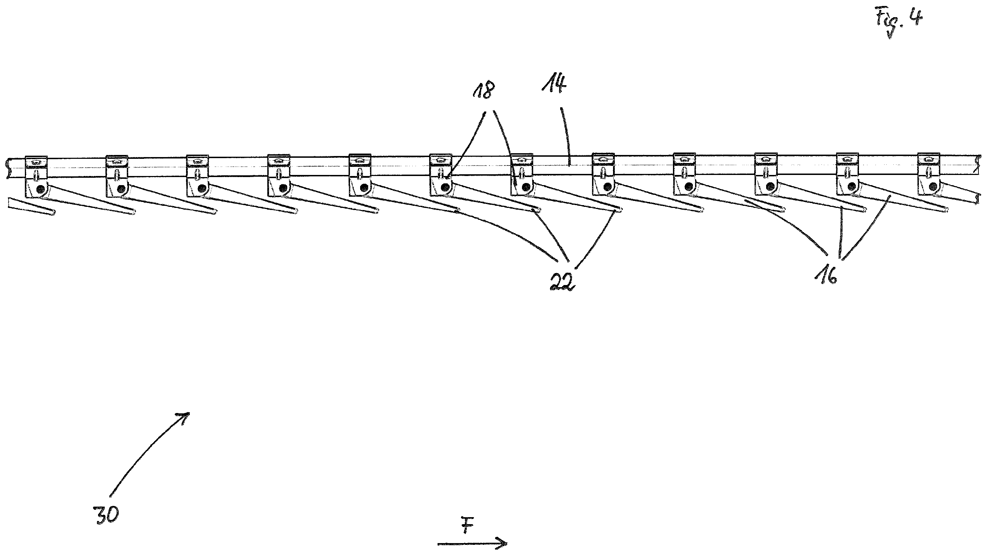

**In** Fig. 4 ist eine Ansicht auf das in Fig. 3 gezeigte Haspelrechenrohr 14 gezeigt, bei der die freien Enden der Haspelzinken 16 entsprechend in Förderrichtung F verschwenkt sind. Aus dem Vergleich der Figuren 3 und 4 wird deutlich, dass die Haspelzinken 16 viel mehr Freiraum unter dem Haspelrechenrohr 14 lassen, damit ein Stapel Erntegut durch diesen Freiraum hindurch befördert werden kann, ohne daran durch die freien Enden 22 der Haspelzinken 16 gehindert zu werden. Die Länge der Haspelzinken 16, mit denen sie in der Neutralstellung senkrecht nach unten hängen, steht bei einer Verschwenkung zur Seite nahezu vollständig als zusätzliche Höhe des Zwischenraums zwischen dem Haspelrechenrohr 14 und dem Ackerboden oder dem Messerbalken 6 zur Verfügung.

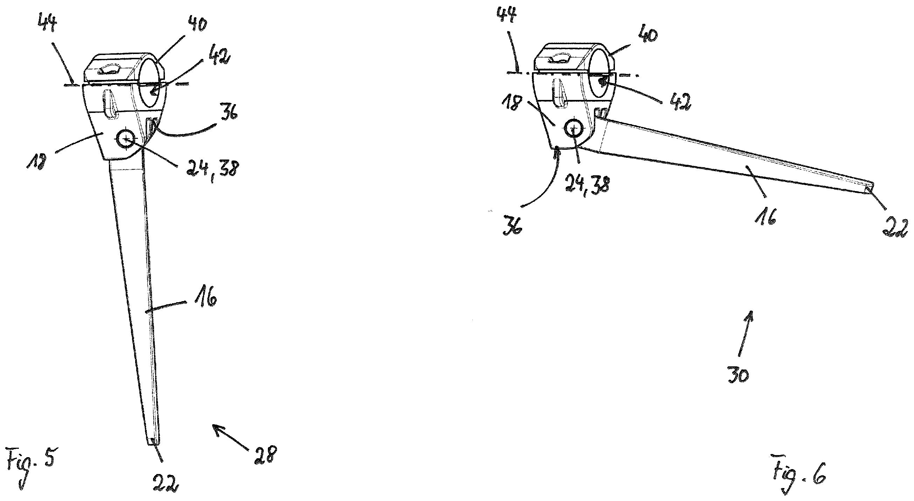

**In** Fig. 5 ist eine Ansicht auf einen einzelnen Haspelzinken 16 in einer nicht verschwenkten Stellung gezeigt. **In** dieser Ansicht ist gut die Befestigungsöse 40 zu erkennen, über die das Lager 18 mit einem Haspelrechenrohr 14 verbunden werden kann. Die Befestigungsöse 40 weist einen Hohlraum 42 mit einer Längsmittelachse 44 auf, der zur Aufnahme eines Haspelrechenrohrs 14 dient, wenn der Haspelzinken 16 daran befestigt werden soll.

In Fig. 6 ist eine Ansicht auf den in Figur 5 gezeigten Haspelzinken 16 in einer Schwenkstellung gezeigt. In dieser Schwenkstellung ist der Haspelzinken 16 so gehalten, dass er sich nahezu parallel an das Haspelrechenrohr 14 anlegt.

Die Erfindung ist nicht auf die vorstehenden Ausführungsbeispiele beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

### Bezugszeichenliste

- 2: Erntemaschine
- 4: Schneidwerk
- 6: Messerbalken
- 8: Annahmefläche
- 10: Fördereinrichtung
- 12: Haspel
- 14: Haspelrechenrohr
- 16: Haspelzinken
- 18: Lager
- 20: Rotationsrichtung Haspel
- 22: freies Ende
- 24: Rotationsachse
- 26: Bewegungsbahn
- 28: Neutralstellung
- 30: Ausweichstellung
- 36: Anschlag
- 38: Schwenkachse
- 40: Befestigungsöse
- 42: Hohlraum
- 44: Längsmittelachse
- A: Arbeitsrichtung
- F: Förderrichtung

## Patentansprüche

1. Schneidwerk (4) zum Anbau an eine Erntemaschine (2) wobei das Schneidwerk folgendes umfasst, einen Rahmen, einen frontseitig angeordneten Messerbalken (6), eine Annahmefläche (8) zur Annahme von geschnittenem Erntegut, Fördereinrichtungen (10) zur Abförderung des geschnittenen Ernteguts, eine rotierend angetriebene und beweglich mit dem Rahmen verbundene Haspel (12), die Haspel (12) weist eine Anzahl von Haspelrechenrohren (14) auf, die über den Umfang der Haspel (12) in deren Rotationsrichtung (20) verteilt angeordnet sind und sich in einer Richtung quer zur Arbeitsrichtung (A) des Schneidwerks (4) erstrecken, eine Anzahl von Haspelzinken (16), die an den Haspelrechenrohren (14) befestigt sind, zumindest einige der Haspelzinken (16) sind an einem zugehörigen Haspelrechenrohr (14) in einem Lager (18) drehbeweglich gelagert, wobei die Drehbewegung um eine Rotationsachse (24) entlang einer durch ein Steuerungsmittel vorgegebenen Bewegungsbahn (26) aus einer Neutralstellung (28) in eine Ausweichstellung (30) und wieder zurück erfolgt, und die Ausweichstellung (30) im Verhältnis zur Neutralstellung (28) einer räumlichen Lage des Haspelzinkens (16) entspricht, bei der das freie Ende (22) des Haspelzinkens (16) in eine einer Förderrichtung (F) der Fördereinrichtung (10) im Bereich des jeweiligen Haspelzinkens (16) entsprechenden Richtung verlagert und der Abstand des freien Endes (22) des jeweiligen Haspelzinkens (16) zum zugehörigen Haspelrechenrohr (14) verringert ist, **dadurch gekennzeichnet, dass** die Ausweichstellung (30) im Verhältnis zur Neutralstellung (28) einer räumlichen Lage des Haspelzinkens (16) entspricht, bei der das freie Ende (22) des Haspelzinkens (16) auch im Verhältnis zur Rotationsrichtung (20) der Haspel (12) vor- oder nachverlagert ist.

2. Schneidwerk (4) nach einem der vorhergehenden Ansprüche, **dadurch gekennzeichnet, dass** die Beweglichkeit des Haspelzinkens (16) aus der Neutralstellung (28) in eine Richtung, die der Förderrichtung (F) der Fördereinrichtung (10) im Bereich des jeweiligen Haspelzinkens (16) entgegengesetzt ist oder dieser entspricht, durch einen Anschlag (36) gesperrt ist.

3. Schneidwerk (4) nach Anspruch 1 oder 2, **dadurch gekennzeichnet, dass** das Steuerungsmittel als eine die Rotationsachse (24) bildende Schwenkachse (38) ausgebildet ist, die nicht parallel zur Längserstreckungsrichtung des Haspelrechenrohrs (14) ausgerichtet ist.

4. Schneidwerk (4) nach Anspruch 1 bis 2 **dadurch gekennzeichnet, dass** als Steuerungsmittel eine zur Rotationsachse (24) des Haspelzinkens (16) schräg angestellte und ortsfeste Gleitfläche als Steuerkulisse ausgebildet ist, auf der der Haspelzinken (16) mit einer Abstützfläche gehalten ist, die bei einer Drehbewegung des Haspelzinkens (16) um die Rotationsachse (24) auf der Gleitfläche gleitet.

5. Schneidwerk (4) nach einem der vorhergehenden Ansprüche, **dadurch gekennzeichnet, dass** der Haspelzinken (16) gegen die Schwerkraft aus der Neutralstellung (28) in die Ausweichstellung (30) beweglich ist.

6. Schneidwerk (4) nach einem der vorhergehenden Ansprüche, **dadurch gekennzeichnet, dass** der Haspelzinken (16) mit einem Kraftspeicher verbunden ist, der bei einer Ausweichbewegung des Haspelzinkens (16) aus der Neutralstellung (28) in die Ausweichstellung (30) eine Rückstellkraft aufbaut.

7. Schneidwerk (4) nach einem der vorhergehenden Ansprüche, **dadurch gekennzeichnet, dass** der Haspelzinken (16) in der Neutralstellung (28) und/oder in einer oder mehreren Ausweichstellungen (30) mit einem Haltemittel arretierbar ist.

8. Schneidwerk (4) nach einem der vorhergehenden Ansprüche, **dadurch gekennzeichnet, dass** die maximal erreichbare Ausweichstellung (30) durch einen Anschlag (36) begrenzt ist und das freie Ende (22) des Haspelzinkens (16) in seiner maximalen Ausweichstellung (30) aus der Neutralstellung (28) um bis zu 75° in eine Richtung quer zur Arbeitsrichtung (A) des Schneidwerks (4) ausgelenkt ist.

9. Schneidwerk (4) nach einem der vorhergehenden Ansprüche, **dadurch gekennzeichnet, dass** der Haspelzinken (16) unter Einwirkung einer auf ihn in eine der Förderrichtung (F) der Fördereinrichtung (10) im Bereich des jeweiligen Haspelzinkens (16) entsprechenden Richtung einwirkenden Kraft ≥ 5 N aus der Neutralstellung (28) in eine Ausweichstellung (30) beweglich ist.

## Claims

1. Cutting unit (4) for attachment to a harvester (2), wherein the cutting unit comprises the following: a frame, a cutter bar (6) arranged on the front side, a receiving surface (8) for receiving cut harvested crop, conveying devices (10) for conveying away the cut harvested crop, a reel (12) that is driven in rotation and connected movably to the frame, the reel (12) has a number of reel rake tubes (14) which are arranged in a manner distributed around the circumference of the reel (12) in the direction of rotation (20) thereof and extend in a direction transverse to the working direction (A) of the cutting unit (4), a number of reel tines (16) which are fastened to the reel rake tubes (14), at least some of the reel tines (16) are mounted rotatably in a bearing (18) on an associated reel rake tube (14), wherein the rotational movement takes place about an axis of rotation (24), along a movement path (26) defined by a control means, from a neutral position (28) into a yielding position (30) and back again, and the yielding position (30), in relation to the neutral position (28), corresponds to a spatial position of the reel tine (16) in which the free end (22) of the reel tine (16) has been displaced in a direction corresponding to a conveying direction (F) of the conveying device (10) in the region of the respective reel tine (16) and the distance of the free end (22) of the respective reel tine (16) from the associated reel rake tube (14) has been decreased, **characterized in that** the yielding position (30), in relation to with the neutral position (28), corresponds to a spatial position of the reel tine (16) in which the free end (22) of the reel tine (16) has also been displaced forward or backward in relation to the direction of rotation (20) of the reel (12).

2. Cutting unit (4) according to any of the preceding claims, **characterized in that** the movability of the reel tine (16) from the neutral position (28) in a direction that is opposite to or corresponds to the conveying direction (F) of the conveying device (10) in the region of the respective reel tine (16) is blocked by a stop (36).

3. Cutting unit (4) according to Claim 1 or 2, **characterized in that** the control means is in the form of a pivot pin (38), forming the axis of rotation (24), which is not oriented parallel to the longitudinal direction of the reel rake tube (14).

4. Cutting unit (4) according to Claim 1 or 2, **characterized in that** the control means is in the form of a positionally fixed sliding surface, positioned obliquely with respect to the axis of rotation (24) of the reel tine (16), in the form of a control guide slot on which the reel tine (16) is retained with a supporting face which slides on the sliding surface during a rotational movement of the reel tine (16) about the axis of rotation (24).

5. Cutting unit (4) according to any of the preceding claims, **characterized in that** the reel tine (16) is movable counter to the force of gravity from the neutral position (28) into the yielding position (30).

6. Cutting unit (4) according to any of the preceding claims, **characterized in that** the reel tine (16) is connected to an energy store which builds up a restoring force during a yielding movement of the reel tine (16) from the neutral position (28) into the yielding position (30).

7. Cutting unit (4) according to any of the preceding claims, **characterized in that** the reel tine (16) is able to be locked in the neutral position (28) and/or in one or more yielding positions (30) by a retaining means.

8. Cutting unit (4) according to any of the preceding claims, **characterized in that** the maximum achievable yielding position (30) is delimited by a stop (36) and the free end (22) of the reel tine (16), in its maximum yielding position (30) from the neutral position (28), has been deflected through up to 75° in a direction transverse to the working direction (A) of the cutting unit (4).

9. Cutting unit (4) according to any of the preceding claims, **characterized in that** the reel tine (16) is movable from the neutral position (28) into a yielding position (30) under the action of a force ≥ 5 N acting on it in a direction corresponding to the conveying direction (F) of the conveying device (10) in the region of the respective reel tine (16).

## Revendications

1. Mécanisme de coupe (4) destiné à être monté sur une machine de récolte (2), le mécanisme de coupe comprenant les éléments suivants : un châssis, une barre de coupe (6) agencée à l'avant, une surface de réception (8) pour la réception du produit récolté coupé, des dispositifs de transport (10) pour l'évacuation du produit récolté coupé, un rabatteur (12) entraîné en rotation et relié de manière mobile au châssis, le rabatteur (12) présentant une pluralité de tubes de râteau de rabatteur (14), qui sont agencés de manière répartie sur la périphérie du rabatteur (12) dans sa direction de rotation (20) et qui s'étendent dans une direction transversale à la direction de travail (A) du mécanisme de coupe (4), un nombre de dents de rabatteur (16) qui sont fixées aux tubes de râteau de rabatteur (14), au moins certaines des dents de rabatteur (16) étant montées de manière mobile en rotation sur un tube de râteau de rabatteur (14) associé dans un palier (18), le mouvement de rotation autour d'un axe de rotation (24) s'effectuant le long d'une trajectoire de déplacement (26) prédéfinie par un moyen de commande, d'une position neutre (28) à une position d'évitement (30) et inversement, et la position d'évitement (30) correspondant, par rapport à la position neutre (28), à une position spatiale de la dent de rabatteur (16), dans laquelle l'extrémité libre (22) de la dent de rabatteur (16) est déplacée dans une direction correspondant à une direction de transport (F) du dispositif de transport (10) dans la zone de la dent de rabatteur (16) respective et la distance entre l'extrémité libre (22) de la dent de rabatteur (16) respective et le tube de râteau de rabatteur (14) associé est réduite, **caractérisé en ce que** la position d'évitement (30) correspond, par rapport à la position neutre (28), à une position spatiale de la dent de rabatteur (16) dans laquelle l'extrémité libre (22) de la dent de rabatteur (16) est également déplacée vers l'avant ou vers l'arrière par rapport à la direction de rotation (20) du rabatteur (12).

2. Mécanisme de coupe (4) selon l'une quelconque des revendications précédentes, **caractérisé en ce que** la mobilité de la dent de rabatteur (16) à partir de la position neutre (28) dans une direction qui est opposée à la direction de transport (F) du dispositif de transport (10) dans la zone de la dent de rabatteur respective (16) ou qui correspond à celle-ci, est bloquée par une butée (36).

3. Mécanisme de coupe (4) selon la revendication 1 ou 2, **caractérisé en ce que** le moyen de commande est réalisé sous la forme d'un axe de pivotement (38) formant l'axe de rotation (24), qui n'est pas orienté parallèlement à la direction d'extension longitudinale du tube de râteau de rabatteur (14).

4. Mécanisme de coupe (4) selon les revendications 1 à 2, **caractérisé en ce que**, comme moyen de commande, une surface de glissement fixe et inclinée obliquement par rapport à l'axe de rotation (24) de la dent de rabatteur (16) est réalisée sous forme de coulisse de commande, sur laquelle la dent de rabatteur (16) est maintenue avec une surface d'appui qui glisse sur la surface de glissement lors d'un mouvement de rotation de la dent de rabatteur (16) autour de l'axe de rotation (24).

5. Mécanisme de coupe (4) selon l'une quelconque des revendications précédentes, **caractérisé en ce que** la dent de rabatteur (16) est mobile contre la force de gravité de la position neutre (28) à la position d'évitement (30).

6. Mécanisme de coupe (4) selon l'une quelconque des revendications précédentes, **caractérisé en ce que** la dent de rabatteur (16) est reliée à un accumulateur de force qui développe une force de rappel lors d'un mouvement d'évitement de la dent de rabatteur (16) de la position neutre (28) à la position d'évitement (30).

7. Mécanisme de coupe (4) selon l'une quelconque des revendications précédentes, **caractérisé en ce que** la dent de rabatteur (16) peut être bloquée dans la position neutre (28) et/ou dans une ou plusieurs positions d'évitement (30) par un moyen de retenue.

8. Mécanisme de coupe (4) selon l'une quelconque des revendications précédentes, **caractérisé en ce que** la position d'évitement (30) maximale pouvant être atteinte est limitée par une butée (36) et l'extrémité libre (22) de la dent de rabatteur (16) est déviée, dans sa position d'évitement maximale (30), de la position neutre (28) jusqu'à 75° dans une direction transversale à la direction de travail (A) du mécanisme de coupe (4).

9. Mécanisme de coupe (4) selon l'une quelconque des revendications précédentes, **caractérisé en ce que** la dent de rabatteur (16) est mobile de la position neutre (28) à une position d'évitement (30) sous l'effet d'une force ≥ 5 N qui lui est appliquée dans une direction correspondant à la direction de transport (F) du dispositif de transport (10) dans la zone de la dent de rabatteur (16) respective.
